Europäisches Patentamt

(19) European Patent Office

Office européen des brevets

(11) Publication number: **0 026 965**
**B1**

(12) **EUROPEAN PATENT SPECIFICATION**

(45) Date of publication of patent specification: **25.01.84**

(21) Application number: **80302325.8**

(22) Date of filing: **09.07.80**

(51) Int. Cl.³: **F 16 L 41/00**, F 16 L 39/00, B 60 T 17/04

(54) **Hydraulic manifold assembly.**

(30) Priority: **04.10.79 PC T/US79/00819**

(43) Date of publication of application:
**15.04.81 Bulletin 81/15**

(45) Publication of the grant of the patent:
**25.01.84 Bulletin 84/4**

(84) Designated Contracting States:
**FR GB IT**

(56) References cited:
**DE - B - 1 018 275
FR - A - 787 829
FR - A - 917 631
US - A - 2 119 420
US - A - 2 928 294
US - A - 3 812 910
US - A - 3 856 334**

(73) Proprietor: **CATERPILLAR TRACTOR CO.
100 Northeast Adams Street
Peoria Illinois 61629 (US)**

(72) Inventor: **Carr, Charles W.
2585, Nine and One Half Street
East Moline Illinois 61244 (US)**
Inventor: **Forster, Kevin G.
R.R. No. 1 51 Box 737
Terre Haute Indiana 47805 (US)**

(74) Representative: **Brunner, Michael John et al,
GILL JENNINGS & EVERY 53-64 Chancery Lane
London WC2A 1HN (GB)**

Courier Press, Leamington Spa, England.

Hydraulic manifold assembly

The invention relates to a hydraulic manifold assembly, and more particularly, to an assembly which is particularly adapted for interconnecting a hydraulic appliance within a substantially sealed chamber and a hydraulic device on the exterior of the chamber.

In the field of construction or mining vehicles, a hydraulic appliance such as a hydraulic motor or pump, a hydraulically operated parking brake, etc. is often disposed in a sealed chamber. Hydraulic fluid must be conveyed to the hydraulic appliance, often from a hydraulic device exterior of the chamber, by conduits entering the chamber containing the appliance.

Because of the rugged environment in which such vehicles operate, it is mandatory that the chamber be sealed so as to prevent the entry of abrasive foreign material or moisture into the same which could damage mechanical components therein, deleteriously affecting seals and the like. Consequently, the point of entry into the chamber of a hydraulic fluid conduit must be sealed and this has been accomplished in a number of ways. However, such methods have proved to be quite costly in that relatively expensive components must be employed or, expensive manufacturing procedures followed to maintain the tolerances required to effect a seal while utilizing relatively inexpensive components. The latter has proved to be quite difficult, particularly in the case of vehicles where the chambers housing the hydraulic appliance are formed of welded metal sections and are of large size.

U.S.—A—3,812,910, shows a pipe connector for connecting a lateral pipe to a well casing and having an inner casing connector which is provided with a tubular stem which extends through a hole of similar, but slightly larger size in the well casing wall. Mounted on the stem externally of the casing wall is an O-ring gasket which is squeezed between a washer and a compression nut to form a fluid type engagement with the casing wall. By this means the pipe connector is securely mounted to the wall of the well casing and fixedly positioned therein. If such a connector were to be used in the field of construction or mining vehicles to connect a hydraulic appliance within the sealed chamber to the exterior of the chamber the connector would suffer from the previously stated vibration problems due to the fact that sole mounting for the connector appears to be by means of the compression nut and washer assembly which would most probably cause serious leakage problems. The U.S. specification does not enable vibrational problems to be overcome nor does it enable mere nominal alignment of any hydraulic assembly located within the well casing in order to avoid the allowance of only very fine tolerances.

According to the invention a hydraulic assembly comprising a substantially sealed chamber containing a hydraulic appliance and a manifold assembly for connecting the appliance to a hydraulic device externally of the chamber to establish fluid communication between the appliance and the device, the manifold assembly comprising a body having at least one fluid conduit extending therethrough for connecting the appliance to the external hydraulic device is characterized in that the body has an externally screw-threaded end sized to extend loosely through an enlarged opening in the sealed chamber, the fluid conduit terminating in a first port in the end for connection to the hydraulic device and a second port spaced therefrom, located within the sealed chamber and connected to the hydraulic appliance, means on the body remote from the opening securing the body within the chamber in nominal alignment with the enlarged opening with the end of the body extending therethrough, and a nut carrying a seal being disposed on the threaded end of the body, the nut being sized to cover the enlarged opening for any position of nominal alignment of the body with the enlarged opening whereby the seal surrounds the opening to seal the chamber.

As a consequence of this construction, exacting tolerances in forming the body, in securing the body within the chamber, and in aligning the opening with the point of securement need not be followed and yet a reliable seal can be provided utilizing components that may be fabricated inexpensively.

One example of a hydraulic assembly according to the invention will now be described with reference to the accompanying drawings in which:—

Figure 1 is a side elevation of a manifold assembly with parts broken away for clarity;

Figure 2 is a view similar to Figure 1 but taken at right angles thereto; and,

Figure 3 is an enlarged sectional view taken approximately along the line 3—3 in Figure 2.

In the example, a manifold assembly is illustrated in the environment of a frame for a motor vehicle. As is well known, such a frame may include rearwardly extending rails, forms of plates welded together to form box sections, the interior plate of one of which is shown at 10. A casting 12, forming part of a conventional vehicle final drive housing, along with the plate 10 and other components (not shown) forms a chamber 14 which is adapted to be sealed from ingress of dirt etc., and a sealed hydraulically disengaged, spring engaged, parking brake 18 of conventional construction is received therein. Actuation of the brake 18 requires the direction of hydraulic fluid thereto from a hydraulic device, such as a pump, exterior of the chamber. A manifold assembly is employed as part of the interconnection between the appliance 18 and the hydraulic device.

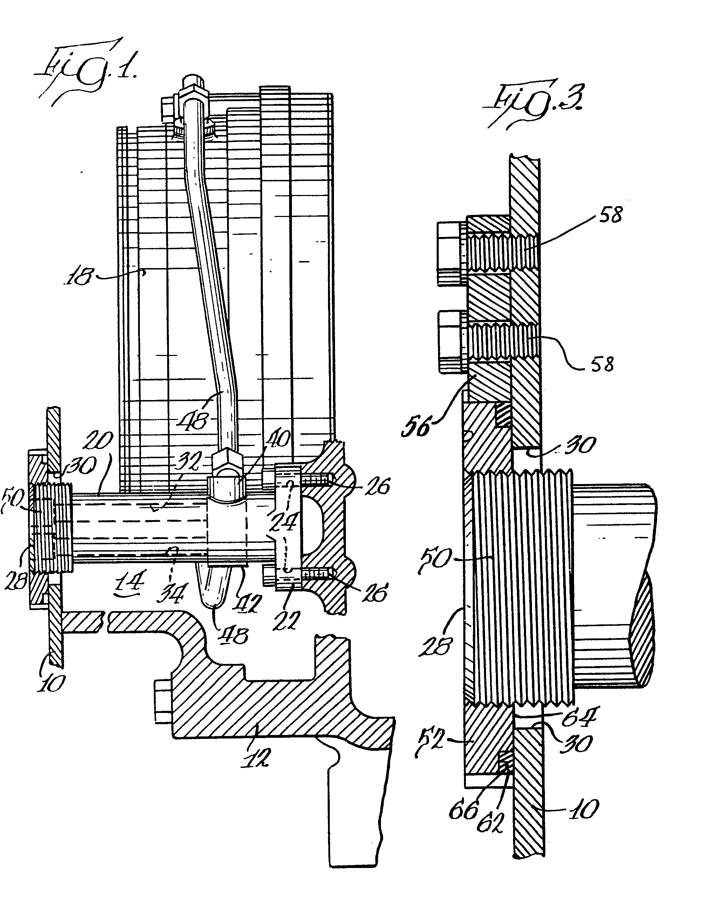

As seen in Figure 1, the manifold assembly includes a body 20 which may be of cast construction. One end of the body is provided with a flange 22 having at least two spaced bolt holes 24, extending therethrough for receipt of bolts 26 threaded into a part of the casing 12 so as to secure the body 20 within the chamber 14. The end of the body 20 opposite the flange 22 is provided with an end 28 which is sized to pass loosely through an enlarged opening 30 in the inner plate 10. The arrangement is such that the body 20, when secured in place, is nominally aligned with the opening 30 without the need for maintaining exacting tolerances in the location of the bolt holes 24 in the flange 22, or the alignment of the opening 30 with the part of the casing 12 to which the body 20 is to be secured. By way of example, the opening 30 may be circular and have a diameter of perhaps as much as one half inch more than the diameter of the body 20 at the end 28. Consequently, a large tolerance of as much as plus or minus one quarter of an inch in the relative positioning of the parts can be allowed and yet achieve the requisite nominal alignment.

The body includes at least one internal fluid passage 32 although more may be employed if desired. As illustrated in the drawings, a second internal fluid passage 34 is also employed.

Each of the passages 32 and 34 terminates, at the end 28 of the body, in a respective port 36, 38, each of which is internally threaded for receipt of suitable fittings (not shown) for connection of hydraulic lines to the hydraulic device exterior of the chamber 14. The opposite ends of the passages 32 and 34 terminate in respective ports 40 and 42 to which are connected fittings 44 and 46 in turn connected to hydraulic piping 48 extending to the appliance 18.

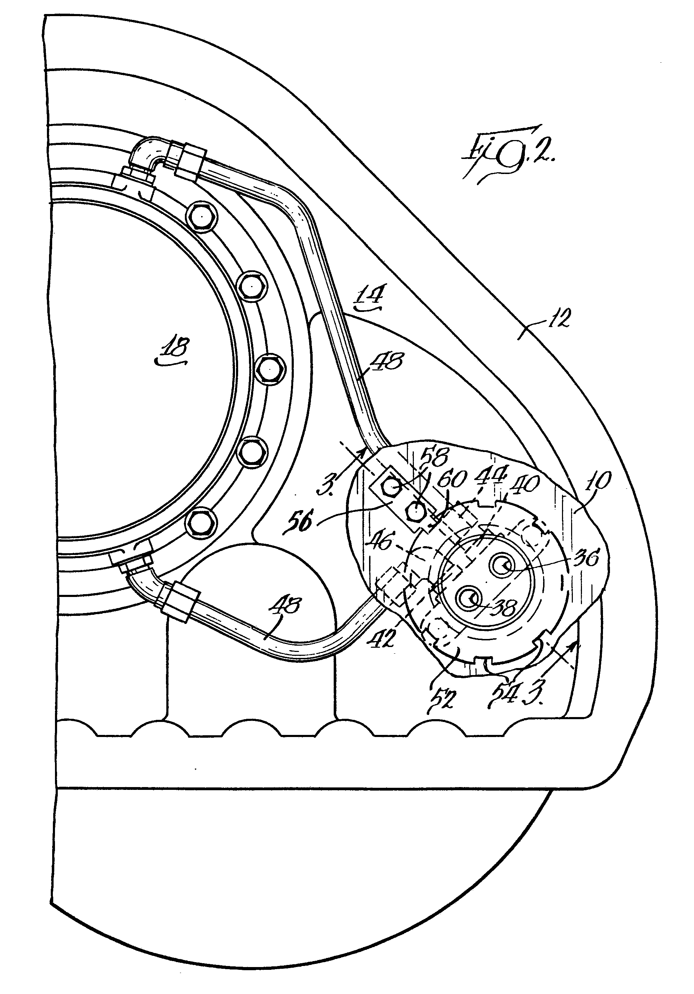

The end 28 of the body 20 is provided with an externally threaded surface 50 which extends through the opening 30 and outwardly of the chamber 14 somewhat. The threaded surface 50 also extends inwardly of the opening 30 to some degree as seen in Figures 1 and 3. A nut 52 is threaded on to the threaded surface 50 from the exterior of the chamber 14, the nut 52 being sized so as to overlie the opening 30 for any position of nominal alignment of the body 20 with the opening 30 to close the opening 30.

As best seen in Figure 2, the nut 52 is preferably a spanner nut provided with a plurality of notches 54 about its periphery. A locking member 56 may be secured to the plate 10 by bolts 58 and is provided with a nose 60 receivable in any one of the notches 54 so as to lock the spanner nut 52 against rotation once it has been properly installed.

To seal the interface of the nut 52 and the plate 10 about the opening 30 a sealing ring 62 is carried by the nut 52 on the side 64 facing the plate 10, the side 64 of the nut 62 being provided with a peripheral groove 66 in which the sealing ring 62 is received. The diameter of the sealing ring 62 is such that it will always contact the plate 10 around the entire periphery of the opening 30 regardless of the position of nominal alignment of the body 20 with respect to the opening 30. Thus, if the opening 30 has a diameter one half inch greater than the diameter of the threaded portion 50 of the body 20, the groove 66 and the sealing ring 62 will have a diameter at least about one inch greater than the diameter of the threaded portion 50.

A manifold assembly according to the invention is particularly suited for use in establishing fluid communication between hydraulic elements, one of which is enclosed with a sealed chamber and the other of which is outside, where the chamber is formed of plates welded together or otherwise fabricated by techniques wherein exacting tolerances are difficult and/or expensive to maintain. Thus, relatively poor tolerances may be employed in positioning the opening 30 in the plate 10 with respect to that part of the final drive casing 12 receiving the bolts 26 and in forming the bolt holes 24 in the flange 22.

## Claims

1. A hydraulic assembly comprising a substantially sealed chamber (14) containing a hydraulic appliance (18) and a manifold assembly for connecting the appliance (18) to a hydraulic device externally of the chamber (14) to establish fluid communication between the appliance (18) and the device, the manifold assembly comprising a body (20) having at least one fluid conduit (32, 34) extending therethrough for connecting the appliance (18) to the external hydraulic device, characterized in that the body (20) has an externally screw-threaded end (28) sized to extend loosely through an enlarged opening (30) in the sealed chamber (14), the fluid conduit (32, 34) terminating in a first port (36, 38) in the end (28) for connection to the hydraulic device and a second port (40, 42) spaced therefrom, located within the sealed chamber (14) and connected to the hydraulic appliance (18), means (22, 24) on the body (20) remote from the opening securing the body within the chamber (14) in nominal alignment with the enlarged opening (30) with the end (28) of the body (20) extending therethrough, and a nut (52) carrying a seal (62) being disposed on the threaded end (28) of the body (20), the nut (52) being sized to cover the enlarged opening (30) for any position of nominal alignment of the body (20) with the enlarged opening (30) whereby the seal (62) surrounds the opening (30) to seal the chamber (14).

2. An assembly according to claim 1, characterized in that the nut (52) is a spanner nut having a series of spaced notches (54) in its periphery.

3. An assembly according to claim 2, further including a locking member (56) having a nose (60) disposable in one of the notches (54), and means (58) for securing the locking member (56) to the exterior of the chamber (14).

4. An assembly according to any of claims 1 to 3, characterized in that the side (64) of the nut adjacent the chamber is provided with a peripheral groove (66), the seal (62) being disposed in the groove (66).

5. An assembly according to any of claims 1 to 4, characterized in that the securing means (22, 24) includes a flange (22) on the body (20) remote from the end (28) and at least two bolt holes (24) in the flange.

## Revendications

1. Ensemble hydraulique comprenant une chambre solidement étanche (14) contenant un appareil hydraulique (18) et un bloc de connection pour connecter l'appareil (18) à un dispositif hydraulique situé à l'extérieur de la chambre (14) de façon à établir la communication du fluide entre l'appareil (18) et le dispositif, le bloc de connection comportant un corps (20) pourvu d'au moins un passage de fluide (32, 34) qui s'étend à travers lui pour connecter l'appareil (18) au dispositif hydraulique externe, caractérisé en ce que le corps (20) possède une extrémité filetée extérieurement (28) dimensionnée pour s'étendre librement à travers une ouverture plus large (30) de la chambre étanche (14), le passage de fluide (32, 34) se terminant par un premier embout (36, 38) situé à l'extrémité (28) pour assurer la connection avec le dispositif hydraulique, et par un deuxième embout (40, 42) éloigné du précédent, situé à l'intérieure de la chambre étanche (14), et relié à l'appareil hydraulique (18), des moyens (22, 24) disposés sur le corps (20) et éloignés de l'ouverture (30) assurant la fixation du corps (20) dans la chambre (14) en alignement nominal avec l'ouverture plus large (30) et avec l'extrémité (28) du corps (20) s'étendant au travers de cette ouverture, tandis qu'un écrou (52) portant un joint d'étanchéité (62) est vissé sur l'extrémité filetée (28) du corps (20), ledit écrou (52) étant dimensionné pour couvrir l'ouverture plus large (30) quelle que soit la position d'alignement du corps (20) par rapport à l'ouverture plus large (30), et le joint (62) entourant l'ouverture (30) pour assurer l'étanchéité de la chambre (14).

2. Ensemble selon la revendication 1, caractérisé en ce que l'écrou (52) est un écrou à clé possédant sur sa périphérie une série d'encoches (54) à une certaine distance les unes des autres.

3. Ensemble selon la revendication 2, caractérisé en ce qu'il comporte en outre un organe de blocage (56) possédant un nez (60) succep- tible de se loger dans l'une des encoches (54) et des moyens (58) pour fixer l'organe de blocage (56) à l'extérieur de la chambre (14).

4. Ensemble selon l'une des revendications 1 à 3, caractérisé en ce que la face (64) de l'écrou située contre la chambre (14) est pourvue d'un sillon périphérique (66), le joint (62) étant disposé dans le sillon (66).

5. Ensemble selon l'une des revendications 1 à 4, caractérisé en ce que les moyens de fixation (22, 24) comprennent une bride (22) sur le corps (20) éloignée de l'extrémité (28) et au moins deux passages de boulons (24) sur la bride (22).

## Patentansprüche

1. Eine Hydraulikanordnung, die eine im wesentlichen abgedichtete Kammer (14) aufweist, welche ein hydraulisches Gerät (18) und eine Rohrverzweigungsanordnung aufweist, um das Gerät (18) mit einer hydraulischen Vorrichtung außerhalb der Kammer (14) zu verbinden, um Strömungsmittelverbindung zwischen dem Gerät (18) und der Vorrichtung herzustellen, wobei die Sammelleitungsanordnung einen Körper (20) aufweist, der mindestens eine Strömungsmittelleitung (32, 34) aufweist, die sich zur Verbindung mit dem Gerät (18) zur externen hydraulischen Vorrichtung hindurch erstreckt, dadurch gekennzeichnet, daß der Körper (20) ein außen mit Schraubengewinde versehenes Ende (28) aufweist, welches derart bemessen ist, um sich locker durch eine vergrößerte Öffnung (30) in der abgedichteten Kammer (14) zu erstrecken, und wobei die Strömungsmittelleitung (32, 34) in einer ersten Öffnung (36, 38) in dem Ende (28) zur Verbindung mit der Hydraulikvorrichtung und in einer mit Abstand dem gegenüber angeordneten zweiten Öffnung (40, 42) endet, und zwar angeordnet innerhalb der abgedichteten Kammer (14) und mit dem hydraulischen Gerät (18) verbunden, und wobei ferner Mittel (22, 24) am Körper (20) entfernt von der Öffnung den Körper innerhalb der Kammer (14) in nominaler Ausrichtung mit der vergrößerten Öffnung (30) befestigen, wobei das Ende (28) des Körpers (20) sich hindurcherstreckt, und wobei ferner eine eine Dichtung (62) tragende Mutter (52) auf dem mit Gewinde versehenen Ende (28) des Körpers (20) angeordnet ist, und wobei die Mutter (52) derart bemessen ist, daß sie die vergrößerte Öffnung (30) für jede Position der nominalen Ausrichtung des Körpers (20) mit der vergrößerten Öffnung (30) abdeckt, woduch die Dichtung (62) die Öffnung (30) zur Adichtung der Kammer (14) umgibt.

2. Anordnung nach Anspruch 1, dadurch gekennzeichnet, daß die Mutter (52) eine Spannmutter ist, die eine Reihe von mit Abstand angeordneten Nuten (54) in ihrem Umfang aufweist.

3. Anordnung nach Anspruch 2, ferner mit einem Verriegelungsglied (56) mit einer in einer der Nuten (54) anordenbaren Nase (60), wobei Mittel (58) vorgesehen sind, um das Verriegelungsglied (56) am Äußeren der Kammer (14) zu befestigen.

4. Anordnung nach einem der Ansprüche 1 bis 3, dadurch gekennzeichnet, daß die Seite (64) der Mutter benachbart zur Kammer mit einer Umfangsnut (66) ausgestattet ist, wobei die Dichtung (62) in der Nut (66) angeordnet ist.

5. Anordnung nach einem der Ansprüche 1 bis 4, dadurch gekennzeichnet, daß die Befestigungsmittel (22, 24) einen Flansch (22) am Körper (20) entfernt gegenüber dem Ende (28) aufweisen und mindestens zwei Bolzenlöcher (24) im Flansch.

Fig.1.

Fig.3.

Fig.2.